# EUROPEAN PATENT SPECIFICATION

(11) **EP 2 479 009 B1**
(45) Date of publication and mention of the grant of the patent: **13.11.2013**
(21) Application number: 10815287.7
(22) Date of filing: 31.08.2010
(51) Int. Cl.: B25J 9/10, F16H 1/32, F16H 57/02

(54) **SWING DEVICE AND ARTICULATED ROBOT HAVING SAME**
SCHWENKVORRICHTUNG UND GELENKROBOTER DAMIT
DISPOSITIF D'OSCILLATION ET ROBOT ARTICULÉ COMPORTANT CELUI-CI

(30) Priority: 14.09.2009 JP 2009211214
(43) Date of publication of application: 25.07.2012
(73) Proprietor: Nabtesco Corporation, Tokyo 102-0093 (JP)
(72) Inventor: FUJIMOTO Kenichi, Tsu-shi Mie 514-8533 (JP)
(74) Representative: Winter, Brandl, Fürniss, Hübner, Röss, Kaiser, Polte - Partnerschaft
(86) International application number: PCT/JP2010/064769
(87) International publication number: WO 2011/030690

(56) References cited:
- EP-A1- 0 241 556
- DE-A1- 4 203 663
- JP-A- 61 004 682
- JP-A- 2005 188 748
- JP-A- 2006 068 886
- KR-B1- 100 749 134

## Description

### TECHNICAL FIELD

The present application claims priority to Japanese Patent Application No. 2009-211214, filed on September 14, 2009. This application relates to a pivoting device. In particular, this application relates to a pivoting device comprising a stopper mechanism for restricting a pivoting range of a pivoted member attached to the pivoting device.

### BACKGROUND ART

A pivoting device that rotates a pivoted member is known. The pivoted member rotates about an axis of the pivoting device. The pivoting device is used, for example, to drive a joint of a robot. In this case, an arm of the robot corresponds to the pivoted member. The pivoting device may have a stopper mechanism for physically restricting a pivoting range of the pivoted member. A technique in which a stopper is attached to each of the pivoting device and the pivoted member is disclosed in Japanese Patent Application Publication No. 1992-275894. In the following description, Japanese Patent Application Publication No. 1992-275894 is called Patent Document 1. In the technique of Patent Document 1, the pivoting range of the pivoted member is restricted by the stoppers making contact with one another at a boundary of a desired pivoting range.
The patent document DE 42 03 663 A1 moreover discloses a pivoting device according to the preamble of claim 1.

### SUMMARY OF THE INVENTION

### Technical Problem

In the technique of Patent Document 1, a stopper is attached to each of the pivoted member and a base of the pivoting device. When the pivoted member is pivoted to a predetermined angle, the stoppers make contact with one another, preventing the pivoted member from pivoting beyond the predetermined angle. That is, each stopper functions as a stopper mechanism. In Patent Document 1, the stoppers are bolted to the pivoting device and the pivoted member respectively. Furthermore, in Patent Document 1, the stopper attached to the pivoting device is called a blocking piece, and the stopper attached to the pivoted member is called an engaging body. According to the technique of Patent Document 1, a bolt hole for bolting each of the stoppers must be formed in each of the pivoting device and the pivoted member. Consequently, the stoppers can be attached only in the bolt holes provided in advance. In the technique of Patent Document 1, there is no scope for choice in the mounting position of the stoppers in the circumferential direction of the pivoting device.

In case of changing the permissible pivoting range, a bolt hole, through which the bolt for fixing the stopper passes, must be formed anew in the pivoting device and/or the pivoted member. That is, in order to change the permissible pivoting range, a bolt hole must be formed anew in the pivoting device and/or the pivoted member. Further, in the pivoting device of Patent Document 1, a portion of each stopper is merely bolted to the pivoting device and the pivoted member. Consequently, if contacting force of the stoppers is great, there is a risk of the stoppers separating from the pivoting device and/or the pivoted member. That is, in the pivoting device of Patent Document 1, strength of the stopper mechanism is low. In document DE 42 03 663 A1, a wedge is necessary to block the stopper in the groove. The present specification teaches a technique for realizing a pivoting device that comprises a strong stopper mechanism and in which the permissible pivoting range can be changed easily.

### Solution to the Technical Problem

The present specification teaches a technique in which the mounting position of the stopper can be changed easily in a circumferential direction of a pivoting device, and a stopper can be attached firmly to the pivoting device. This pivoting device comprises a case, a rotational member configured to rotate relative to the case, and a stopper configured to restrict a pivoting range of the rotational member relative to the case. In this pivoting device, a plurality of grooves extending in an axial direction of the rotational member is formed on the case. The plurality of grooves is formed along a circular arc having a center coaxial with an axis of the rotational member. Further, a bolt hole through which a bolt for fixing the case passes is formed at each of projections that define two adjacent grooves. A portion of the stopper is inserted in one of the grooves, and the stopper is fixed to the case by the bolts for fixing the case.

Furthermore, "rotational member" in the present specification includes a component rotating relative to the case. Typically, an output shaft of the pivoting device corresponds to the "rotational member". The "pivoted member" is a member attached to the rotational member, and includes a target rotated by the pivoting device. In case of an industrial robot, an arm to be pivoted corresponds to the "pivoted member". Furthermore, if the rotational member is fixed to an immovable surface, the rotational member does not rotate, and the case rotates relative to the immovable surface. In this case, the "pivoted member" is attached to the case of the pivoting device.

According to the pivoting device described above, the plurality of grooves is formed in the case, and the bolt hole is formed at each of the projections that define the grooves. Consequently, the choice of mounting positions of the stopper improves. The plurality of grooves is formed along the circular arc having the center coaxial with the axis of the rotational member. Consequently, the stopper can realize the function of a stopper mechanism, no matter which groove the stopper is fixed to.

Further, the portion of the stopper is inserted in the groove formed on the case. Since both sides of the stopper make contact with side walls of the groove, the stopper does not readily separate from the pivoting device when force is exerted on the stopper. Consequently, according to the pivoting device described above, a strong stopper mechanism with a wide choice of mounting positions can be realized. Further, in the pivoting device described above, the stopper can be fixed to the case using the bolt hole for fixing the case. Another bolt hole, in addition to the bolt hole for fixing the case, need not be formed in the case in order to fix the stopper thereto.

The plurality of grooves may be aligned at equal intervals along the circular arc having the center coaxial with the axis of the rotational member. Thereby, the position of attaching the stopper can be adjusted accurately for each predetermined angle having the axis of the rotational member as its center.

### Effect of the Invention

According to the technique taught in the present specification, a pivoting device can be realized which comprises a strong stopper mechanism and in which a permissible pivoting range can be easily adjusted.

### BRIEF DESCRIPTION OF THE DRAWINGS

Fig. 1 shows an exterior of an industrial robot comprising a stopper mechanism.
Fig. 2 shows a cross-sectional view of a pivoting device comprising the stopper mechanism.
Fig. 3 shows a plan view of the pivoting device.
Fig. 4 shows a perspective view of a case of the pivoting device.
Fig. 5 shows a perspective view of a first stopper of a first embodiment.
Fig. 6 shows a perspective view of the pivoting device of the first embodiment in a state of being attached to a fixing member.
Fig. 7 shows a perspective view of a first stopper of a second embodiment.
Fig. 8 shows a perspective view of a pivoting device of the second embodiment in a state of being attached to a fixing member.

### DESCRIPTION OF THE EMBODIMENTS

Before describing the embodiments, several technical features of the embodiments will be noted.
(First feature) A pivoting device drives a first joint of an industrial robot having a plurality of joints. From among the plurality of joints of the industrial robot, the first joint is a joint disposed closest to a base side.
(Second feature) The pivoting device is an eccentrically-rotating gear type gear transmission.
(Third feature 3) The pivoting device comprises a case and a rotational member rotatably supported on the case. The rotational member is attached to a fixing member disposed at a base side. The case is attached to a pivoted member that is disposed at a side opposite the base and interposing the pivoting device between itself and the base.

### (First embodiment)

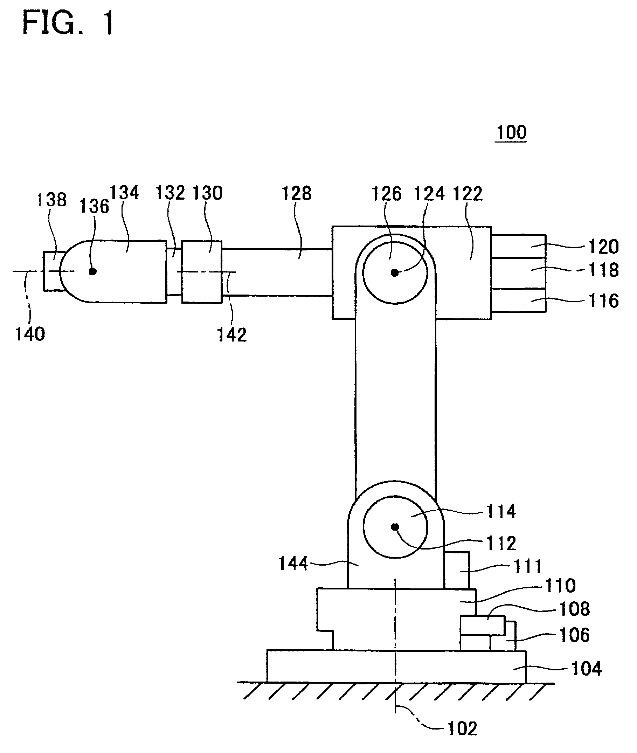

Fig. 1 shows a schematic view of an exterior of an industrial robot 100. The industrial robot 100 is a multi-joint robot and has a first joint 110, a second joint 114, a third joint 126, a fourth joint 130, a fifth joint 134 and a sixth joint 138. The first joint 110 is attached to a main base 104, and is capable of rotating about an axis 102. The main base 104 is fixed to a mounting surface (an immovable surface). The second joint 114 is attached to a joint base 144, and is capable of rotating about an axis 112. From among the plurality of joints of the industrial robot 100, the first joint 110 is disposed closest to a base side (mounting surface side).

The first joint 110 rotates the joint base 144 about the axis 102, relative to the main base 104. Furthermore, a reference number 111 indicates a motor for driving the first joint 110. The third joint 126 is capable of rotating about an axis 124. The third joint 126 rotates a shoulder 122 about the axis 124. The fourth joint 130 is capable of rotating about an axis 142. The third joint 126 and the fourth joint 130 are joined by a rod 128. The fifth joint 134 is capable of rotating about an axis 136. The fourth joint 130 and the fifth joint 134 are joined by a rod 132. The sixth joint 138 is capable of rotating about an axis 140. Reference numbers 116, 118, 120 respectively indicate motors for driving the fourth joint 130, the fifth joint 134 and the sixth joint 138. A pivoting device is embedded within each of the first to sixth joints. In the description below, the first to sixth joints may respectively be called the first-sixth pivoting devices. The joint base 144 is disposed at an opposite side from the main base 104 which is disposed at the base side, and the pivoting device 110 is interposed between itself and the joint base 144. The joint base 144 corresponds to a pivoted member for the first pivoting device 110.

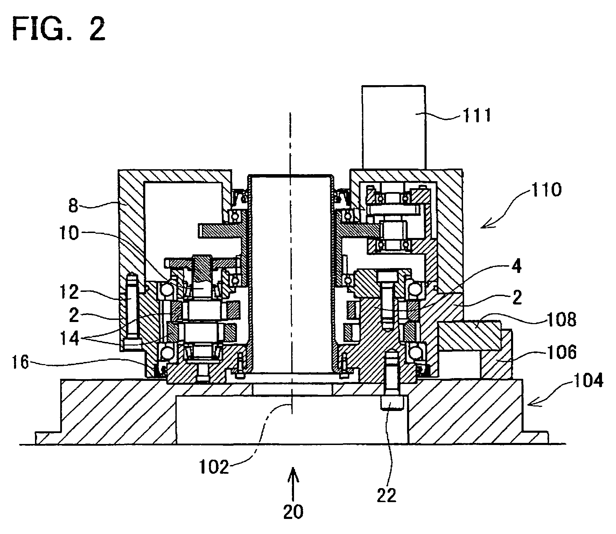

Fig. 2 shows a cross-sectional view of the first pivoting device 110 and the main base 104. Furthermore, in order to clarify the drawing, hatching of part of the components has been omitted. The first pivoting device 110 has a case 2 and a rotational member 4 rotatably supported on the case 2. The rotational member 4 is fixed to the main base 104 by a bolt 22. Since the main base 104 is fixed to the mounting surface, the rotational member 4 can also be said to be attached to the mounting surface. The case 2 is fixed to a support member 8 by a bolt 12. Furthermore, although not shown, the support member 8 is fixed to the joint base 144 of Fig. 1. Consequently, the case 2 can also be said to be attached to the joint base 144.

When the rotational member 4 rotates relative to the case 2, the joint base 144 rotates relative to the main base 104. A first stopper 108 is attached to the case 2, and rotates relative to the main base 104 accompanying the rotation of the case 2. Furthermore, although details will be discussed later, grooves are formed at an outer circumference side of the case 2, and a portion of the first stopper 108 is inserted into one of the grooves. The first stopper 108 extends from the case 2 to an outer side along a radial direction of the first pivoting device 110 (equal to a radial direction of the rotational member 4). Furthermore, "radial direction" includes a direction orthogonal to the axis 102 of the first pivoting device 110.

A second stopper 106 is fixed to the main base 104. The second stopper 106 extends along the axis 102 and restricts the pivoting of the first stopper 108. The second stopper 106 is disposed in a position so that it is collided by the first stopper 108 if the first stopper 108 continues to rotate. Thus, the amount the case 2 pivots relative to the main base 104 is restricted. The stopper mechanism of the industrial robot 100 is formed by the first stopper 108 and the second stopper 106.

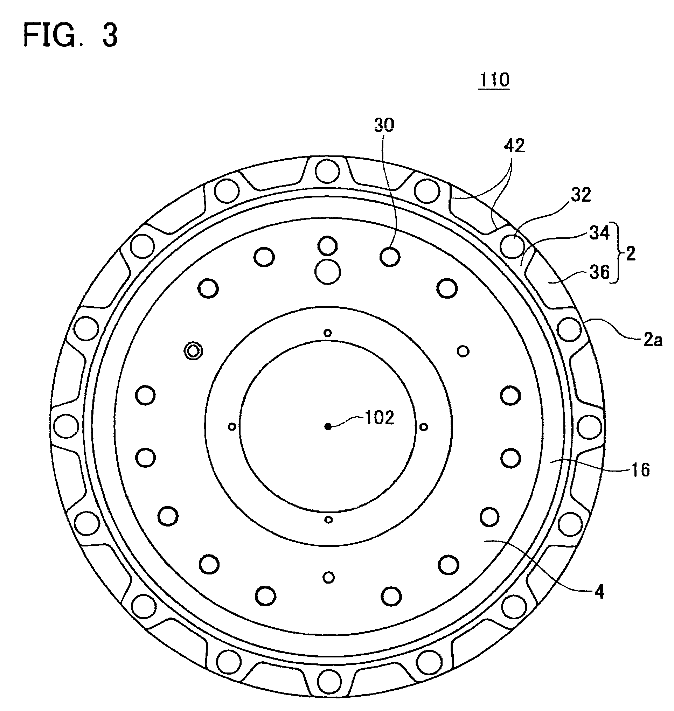

Fig. 3 shows a figure of the first pivoting device 110 viewed from the direction of an arrow 20 of Fig. 2. The case 2 has a cylindrical outer circumferential surface 2a having the same axis as the rotational axis 102 of the rotational member 4. In Fig. 3, the first stopper 108 has been omitted. A plurality of grooves 36 is formed at the outer circumference side of the case 2. The plurality of grooves 36 is aligned along a circular arc having its center coaxial with the rotational axis 102. Further, the grooves 36 are formed at equal intervals along the circumferential direction of the outer circumferential surface 2a of the case 2. In other words, projections 34 that define the grooves 36 are formed at equal intervals in the circumferential direction on the circumferential surface of the case 2. A bolt hole 32 for fixing the case 2 to the support member 8 is formed in each of the projections 34 (see also Fig. 2). The rotational member 4 is disposed inside the case 2. A plurality of bolt holes 30 for fixing the rotational member 4 to the main base 104 is formed in the rotational member 4. An oil seal 16 is disposed between the case 2 and the rotational member 4. The oil seal 16 prevents oil within the first pivoting device 110 from leaking to the exterior of the first pivoting device 110.

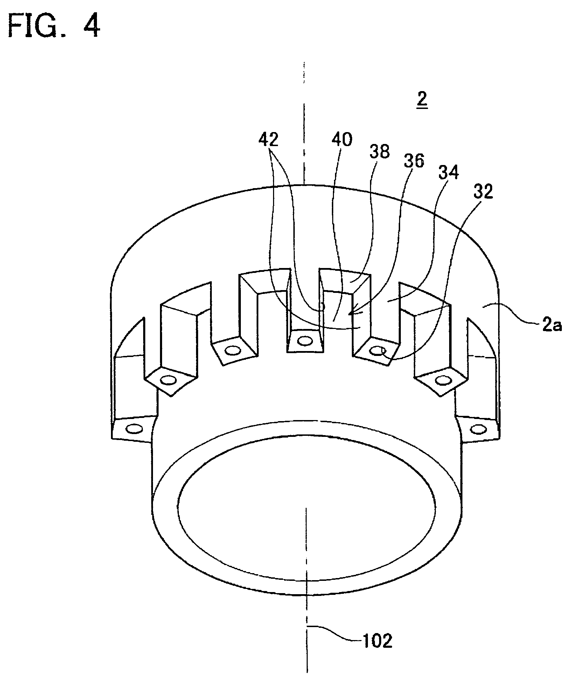

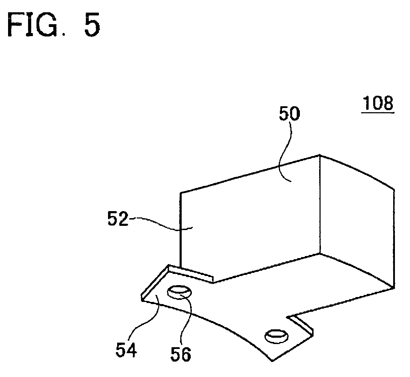

Fig. 4 shows a perspective view of the case 2. Furthermore, Fig. 4 is a schematic view for describing the characteristics of the case 2, and does not accurately represent the shape of the case 2 shown in Fig. 3. For example, the number, dimensions, etc. of the grooves 36 differ from the shape of the case 2 shown in Fig. 3. This also applies for Figs. 5-8, to be described later. As shown in Fig. 4, the grooves 36 extend along the axis 102, and each of them has a bottom surface 38 at one side in the direction of the axis 102. In other words, the grooves 36 are open at only one side in the direction of the axis 102. Furthermore, each of the grooves 36 also has a bottom surface 40 in a direction orthogonal to the axis 102 (a radial direction of the case 2).

Fig. 5 shows a perspective view of the first stopper 108. The first stopper 108 has a fixing portion 54, an inserting portion 52 and a protruding portion 50. Two bolt holes 56 are formed in the fixing portion 54. The pitch of the bolt holes 56 is equal to the pitch of the bolt holes 32 of the case 2 (see Fig. 4). The shape of the inserting portion 52 is approximately equal to the shape of the groove 36 of the case 2. Consequently, the first stopper 108 can be inserted into the groove 36 in a state making contact with side walls 42 and the bottom surfaces 38, 40 of the groove 36. The first stopper 108 is firmly fixed to the case 2 by passing a bolt through the bolt holes 56, 32 when the inserting portion 52 is in an inserted state in the groove 36. Furthermore, when the inserting portion 52 is inserted into the groove 36, the protruding portion 50 protrudes to the outside in the radial direction of the case 2. In other words, the first stopper 108 extends from the case 2, along the radial direction of the case 2, toward the outside of the case 2.

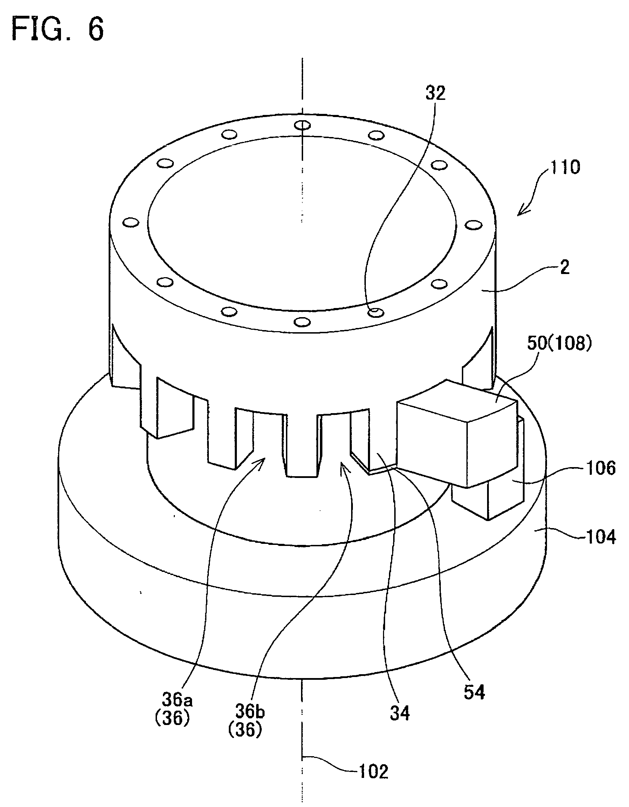

Fig. 6 shows a perspective view of the first pivoting device 110 in a state attached to the main base 104. Only the case 2 and the first stopper 108 of the first pivoting device 110 are shown. As described above, the bolt 12 for fixing the case 2 to the support member 8 (see Fig. 2) passes through the bolt hole 32. The bolts 12 are fastened to the support member 8 in a state of being passed through the bolt holes 56 of the fixing portion 54 shown in Fig. 5 and through the bolt holes 32 of the case 2 shown in Fig. 4. In other words, the first stopper 108 and the case 2 are jointly fastened to the support member 8 by the bolts 12. As described above, when the first pivoting device 110 drives, the case 2 rotates about the axis 102 relative to the main base 104. Thus, the first stopper 108 pivots about the axis 102.

In the first pivoting device 110, the case 2 is prevented from making a full rotation about the axis 102 by the stopper mechanism comprising the first stopper 108 and the second stopper 106. In other words, in the first pivoting device 110, the case 2 is restricted so as to rotate only by a predetermined angle less than 360° about the axis 102. The second stopper 106 is disposed at a position so as to collide with the first stopper 108 when the case 2 is attempted to pivot beyond the predetermined angle. That is, the second stopper 106 is disposed in a range where the first stopper 108 would be present if the case 2 did pivot beyond the predetermined angle under a state in which the second stopper 106 is not present. When the first pivoting device 110 has moved abnormally, the joint base 144 can be prevented from pivoting beyond the predetermined angle by the stopper mechanism comprising the first stopper 108 and the second stopper 106 (see Fig. 1).

Here, the first pivoting device 110 will be described. The first pivoting device 110 is an eccentrically-rotating gear type gear transmission. Since the basic structure of the eccentrically-rotating gear type gear transmission is known, a simple description will be given. As shown in Fig. 2, the first pivoting device 110 comprises the case 2 and the rotational member 4 rotatably supported on the case 2. The case 2 is ring shaped, and inner teeth are formed on its inner circumferential surface. The rotational member 4 supports an external gear 14 and a crankshaft 10. The crankshaft 10 extends along the axis 102. An axis of the crankshaft 10 is offset from the axis 102. Although not shown, in the first pivoting device 110, a plurality of the crankshafts 10 is disposed along the circumferential direction of the axis 102. Each of the plurality of crankshafts 10 engages with the external gear 14. Torque from the motor 111 is transmitted to the crankshafts 10. When the crankshafts 10 rotate, the external gear 14 eccentrically rotates about the axis 102 while meshing with the inner teeth formed on the inner circumferential surface of the case 2. Since the number of outer teeth of the external gear 14 differs from the number of inner teeth of the case 2, the external gear 14 and the case 2 rotate relative to one another when the external gear 14 eccentrically rotates. Thereby, the rotational member 4 and the case 2 rotate relative to one another.

As described above, among the plurality of joints of the industrial multi-joint robot 100, the first pivoting device 110 is used as the joint (first joint) that is disposed closest to the mounting surface side. The first pivoting device (first joint) 110 rotates the other joints, etc. relative to the mounting surface. Consequently, the first pivoting device 110 needs to output a large torque. The eccentrically-rotating gear type gear transmission can realize a large reduction ratio (for example, a reduction ratio 30~250). In other words, the first pivoting device 110 of the present embodiment can output a large torque.

As described above, the first pivoting device 110 can output a large torque. Consequently, when the first stopper 108 and the second stopper 106 have collided, a large force acts between the two. However, because both sides of the first stopper 108 make contact with the side walls 42 of the groove 36, the first stopper 108 can be prevented from separating from the case 2 even if a large force is acting on the first stopper 108. Consequently, the stopper mechanism of the present embodiment is stronger than the conventional stopper mechanism, and a more secure industrial robot can be realized. Furthermore, regarding the angle formed by the side wall 42 and the bottom surface 40, this angle is more preferable to be closer to 90°. More accurately, it is more preferable to have a point of intersection of extrapolation of the two side walls 42 that define the groove 36 closer to the axis 102 in Fig. 3. Thereby, when the force applied from the first stopper 108 to the groove 36 increases and the first stopper 108 and the second stopper 106 collide, the force borne by the groove 36 increases. In other words, the closer the point of intersection of the extrapolation of the two side walls 42 to the axis 102, the stronger the stopper mechanism that can be realized.

In the first pivoting device 110, the first stopper 108 is fixed to the case 2 using the bolt holes 32 for fixing the case 2 to the support member 8. Consequently, bolt holes solely for fixing the first stopper 108 do not need to be formed in the case 2. Further, since the bolt holes 32 are formed in each of the projections 34 of the case 2, the fixing position of the first stopper 108 can be changed easily. In other words, the first pivoting device 110 has a wide choice of mounting positions for the first stopper 108. For example, in Fig. 6, new processing does not need to be performed on the case 2 even if changing the fixing position of the first stopper 108 to the grooves 36a, 36b, etc. Furthermore, as described above, the grooves 36 are formed at equal intervals along the circumferential direction of the case 2. Consequently, the mounting position of the first stopper 108 can be adjusted accurately at each predetermined angle having the axis 102 as its center. In other words, the range of restricting pivoting of the case 2 can be adjusted accurately at each predetermined angle.

The plurality of the grooves 36 is aligned along the circular arc having its center coaxial with the axis 102 of the rotational member 4. Consequently, no matter which groove 36 the first stopper 108 is fixed to, the first stopper 108 is disposed so as to collide with the second stopper 106 when the case 2 and the rotational member 4 rotate relative to one another. Consequently, the first stopper 108 achieves the function of the stopper mechanism no matter which groove 36 it is fixed to.

For example, in a factory it may be desirable to restrict the pivoting range of a robot for safety reasons or to prevent interference with other equipment. The pivoting range of the robot may need to be changed together with changes to the layout of the industrial robot. Conventionally, the user of the industrial robot had to individually perform an additional process to change the position of the stopper. In an industrial robot that has adopted the pivoting device of the present embodiment, the pivoting range of the robot can be changed without performing an additional process.

### (Embodiment 2)

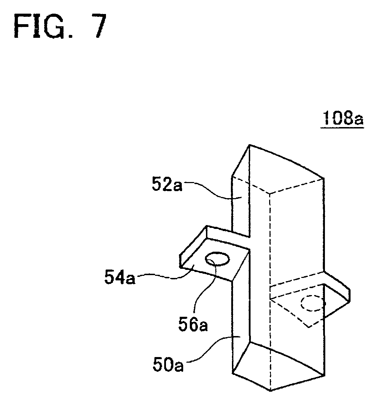

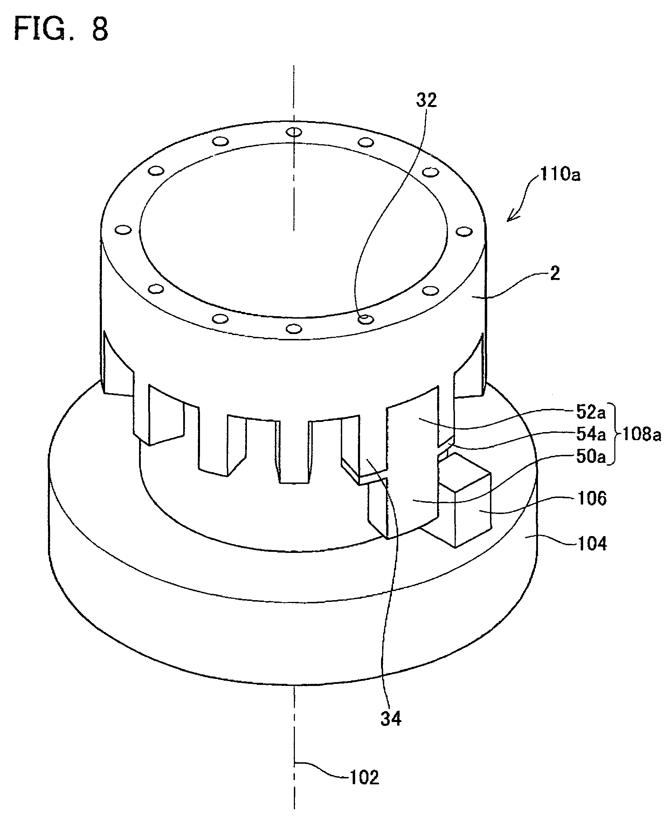

Fig. 7 shows a perspective view of a first stopper 108a. Fig. 8 shows a perspective view of a first pivoting device 110a that utilizes the first stopper 108a, in a state attached to the main base 104. Furthermore, since the first stopper 108a is a variant of the first stopper 108, the same functional portions as the first stopper 108 may be appended reference numbers having the same number thereto, thereby omitting a detailed description. Further, the first pivoting device 110a differs from the first pivoting device 110 only in the shape of the first stopper. The first stopper 108a extends from the case 2 to an outside of the case 2 along the axis 102, and a protruding portion 50a protrudes in the direction of the axis 102 of the case 2. Consequently, the size of the first pivoting device 110a in the radial direction is equal to the size of the case 2 in the radial direction. That is, in the first pivoting device 110a, a protruding portion is not present in the radial direction. Consequently, when the first pivoting device 110a is driving, the first stopper 108a can be prevented from colliding with equipment, etc. in the surroundings of the first pivoting device 110a. The safety of the industrial robot 100 can be increased.

In the above embodiments, the stopper mechanism was described, as an example, as being provided on the first joint 110 of the industrial robot. The stopper mechanism can also be provided on other joints. For example, the stopper mechanism may be provided on the third joint (the third pivoting device) 126. In this case, a plurality of grooves is formed, on the case of the third pivoting device 126, along a circular arc having its center coaxial with the axis of the rotational member, and the first stopper is inserted into any of the grooves. A second stopper is fixed to the shoulder 122.

In the above embodiments, one first stopper 108 (108a) is fixed to the case 2. A plurality of the first stoppers 108 (108a) may be fixed to the case 2.

In the above embodiments, the outer circumferential surface 2a of the case 2 is cylindrical. If the plurality of the grooves 36 formed on the case 2 is formed along a circular arc that has the same axis 102 as the rotational member 4, the shape of the outer circumferential surface of the case 2 need not be cylindrical. For example, the case of the pivoting device may be polygonal.

In the above embodiments, the case 2 is fixed to the joint base 144 (the pivoted member), and the rotational member 4 is fixed to the main base 104. The case 2 may be fixed to the main base 104, and the rotational member 4 may be fixed to the joint base 144. In this case, the second stopper is fixed to the joint base 144.

In the above embodiments, an eccentrically-rotating gear type gear transmission is used as the pivoting device. However, as long as it can rotate the rotational member relative to the case, another type of pivoting device may be used. Further, in case of the eccentrically-rotating gear type gear transmission, the crankshaft may be coaxial with the axis of the rotational member.

The stopper mechanism of the embodiments can also be expressed as follows. The second stopper is attached to the pivoted member fixed to the rotational member of the pivoting device. The second stopper is disposed at a position where it will collide with the first stopper fixed to the case when the rotational member has been rotated by a predetermined angle relative to the case. A stopper mechanism which restricts the pivoting range of the rotational member is realized by the first stopper and the second stopper. Furthermore, the second stopper may be fixed directly to the rotational member, or may be fixed to the rotated member that is fixed to the rotational member.

Specific examples of the present invention are described above in detail, but these examples are merely illustrative and place no limitation on the scope of the patent claims. The technology described in the patent claims also encompasses various changes and modifications to the specific examples described above. The technical elements explained in the present specification or drawings provide technical utility either independently or through various combinations. The present invention is not limited to the combinations described at the time the claims are filed. Further, the purpose of the examples illustrated by the present specification or drawings is to satisfy multiple objectives simultaneously, and satisfying any one of those objectives gives technical utility to the present invention.

## Claims

1. A pivoting device (110;110a) comprising:
a case (2);
a rotational member (4) configured to rotate relative to the case (2); and
a stopper (108;108a) configured to restrict a pivoting range of the rotational member (4) relative to the case (2),
wherein a plurality of grooves (36) extending in an axial direction of the rotational member (4) is formed on the case (2), the plurality of grooves (36) being formed along a circular arc having a center coaxial with an axis (102) of the rotational member (4),
and wherein a portion (52;52a) of the stopper (108;108a) is inserted in one of the grooves(36), **characterized in that**
a first bolt hole (32) through which a bolt for fixing the case (2) passes is formed at each of projections (34) that define two adjacent grooves(36), and **in that**, the stopper (108;108a) is fixed by the bolts.

2. The pivoting device (110;110a) according to claim 1, wherein
the stopper (108;108a) comprises two second bolt holes (56;56a),
a pitch of the second bolt holes (56;56a) is equal to a pitch of the first bolt holes (32),
the bolts pass through the second bolt holes (56;56a) and the first bolt holes (32), and
the first stopper (108;108a) and the case (2) are jointly fastened by the bolts.

3. The pivoting device (110;110a) according to claim 1 or 2, wherein
the plurality of grooves (36) is aligned at equal intervals along the circular arc having the center coaxial with the axis (102) of the rotational member (4).

4. The pivoting device (110;110a) according to any one of claims 1 to 3, wherein
the plurality of grooves (36) is formed on a circumferential surface (2a) of the case (2).

5. The pivoting device (110) according to any one of claims 1 to 4, wherein
the stopper (108) extends to an outside of the case (2) along a radial direction of the rotational member (4).

6. The pivoting device (110a) according to any one of claims 1 to 4, wherein
the stopper (1 08a) extends to an outside of the case (2) along the axial direction of the rotational member(4).

7. The pivoting device (110a) according to claim 6, wherein
the plurality of grooves (36) is formed on a circumferential surface (2a) of the case (2), and
a size of the pivoting device (110a) in a radial direction is equal to a size of the case (2) in said radial direction.

8. The pivoting device (110;110a) according to any one of claims 1 to 7, wherein
the pivoting device (110;110a) is an eccentrically-rotating gear type gear transmission.

9. A multi-joint robot (100) comprising the pivoting device (110;110a) according to any one of claims 1 to 8, wherein
the pivoting device (110;110a) drives a joint which is disposed closest to a base side,
the rotational member (4) is arranged on a base, and
the case (2) rotates relative to the base.

## Patentansprüche

1. Schwenkvorrichtung (110; 110a), umfassend:
Eine Hülse (2);
ein Drehelement (4), das dazu eingerichtet ist, sich relativ zu der Hülse (2) zu drehen; und
einen Anschlag (108; 108a), der dazu eingerichtet ist, einen Schwenkbereich des Drehelements (4) gegenüber der Hülse (2) zu begrenzen,
wobei an der Hülse (2) eine Vielzahl von Nuten (36) ausgebildet ist, die sich in einer axialen Richtung des Drehelements (4) erstrecken, wobei die Vielzahl von Nuten (36) entlang eines Kreisbogens ausgebildet ist, der einen Mittelpunkt aufweist, der koaxial mit einer Achse (102) des Drehelements (4) ist, und wobei ein Abschnitt (52; 52a) des Anschlags (108; 108a) in eine der Nuten (36) eingefügt ist, **dadurch gekennzeichnet, dass**
an jedem Vorsprung (34), der zwei benachbarte Nuten (36) definiert, ein erstes Bolzenloch (32) ausgebildet ist, durch das ein Bolzen zum Befestigen der Hülse (2) hindurchragen, und dass der Anschlag (108, 108a) durch die Bolzen befestigt ist.

2. Schwenkvorrichtung (110; 100a) gemäß Anspruch 1, wobei
der Anschlag (108; 108a) zwei zweite Bolzenlöcher (56; 56a) umfasst,
ein Abstand der zweiten Bolzenlöcher (56; 56a) gleich ist zu einem Abstand der ersten Bolzenlöcher (32),
die Bolzen durch die zweiten Bolzenlöcher (56, 56a) und die ersten Bolzenlöcher (32) hindurchragen, und
der erste Anschlag (108; 108a) und die Hülse (2) gemeinsam durch die Bolzen befestigt sind.

3. Schwenkvorrichtung (110; 100a) gemäß Anspruch 1 oder 2, wobei
die Vielzahl von Nuten (36) in gleichen Abständen entlang des Kreisbogens ausgerichtet ist, der den Mittelpunkt aufweist, der koaxial mit der Achse (102) des Drehelements (4) ist.

4. Schwenkvorrichtung (110; 100a) gemäß einem der Ansprüche 1 bis 3, wobei
die Vielzahl von Nuten (36) an einer Umfangsfläche (2a) der Hülse (2) ausgebildet ist.

5. Schwenkvorrichtung (110) gemäß einem der Ansprüche 1 bis 4, wobei
sich der Anschlag (108) entlang einer radialen Richtung des Drehelements (4) zum Äußeren der Hülse (2) erstreckt.

6. Schwenkvorrichtung (110a) gemäß einem der Ansprüche 1 bis 4, wobei
wobei sich der Anschlag (108a) entlang der axialen Richtung des Drehelements (4) zum Äußeren der Hülse (2) erstreckt.

7. Schwenkvorrichtung (110; 100a) gemäß Anspruch 6, wobei
die Vielzahl von Nuten (36) an einer Umfangsfläche (2a) der Hülse (2) ausgebildet ist, und
die Abmessungen der Schwenkvorrichtung (110a) in einer radialen Richtung gleich sind zu den Abmessungen der Hülse (2) in dieser radialen Richtung.

8. Schwenkvorrichtung (110; 100a) gemäß einem der Ansprüche 1 bis 7, wobei
die Schwenkvorrichtung (110; 110a) ein exzentrisch drehendes Zahnrad-Schaltgetriebe ist.

9. Vielgelenk-Roboter (100), umfassend eine Schwenkvorrichtung (110; 110a)
gemäß einem der Ansprüche 1 bis 8, wobei
die Schwenkvorrichtung (110, 110a) ein Gelenk antreibt, das am Nächsten zu einer Fußseite angeordnet ist,
das Drehelement (4) an einem Fuß angeordnet ist, und
die Hülse (2) sich relativ zu dem Fuß dreht.

## Revendications

1. Dispositif de pivotement (110 ; 110a) comprenant :
un carter (2) ;
un élément de rotation (4) configuré pour tourner par rapport au carter (2) ; et
un dispositif d'arrêt (108 ; 108a) configuré pour limiter la plage de pivotement de l'élément de rotation (4) par rapport au carter (2) ;
dans lequel une pluralité de rainures (36) s'étendant suivant une direction axiale de l'élément de rotation (4), est formée sur le carter (2), la pluralité de rainures (36) étant formée le long d'un arc circulaire présentant un centre coaxial à un axe (102) de l'élément de rotation (4) ; et
dans lequel une partie (52 ; 52a) du dispositif d'arrêt (108 ; 108a) est introduite dans l'une des rainures (36), **caractérisé en ce que**
un premier trou de boulon (32) à travers lequel passe un boulon destiné à fixer le carter (2), est formé au niveau de chacune des saillies (34) qui définissent deux rainures adjacentes (36) ; et **en ce que**
le dispositif d'arrêt (108 ; 108a) est fixé par les boulons.

2. Dispositif de pivotement (110 ; 110a) selon la revendication 1, dans lequel
le dispositif d'arrêt (108 ; 108a) comprend deux seconds trous de boulon (56 ; 56a) ;
l'écartement des seconds trous de boulon (56 ; 56a) est égal à l'écartement des premiers trous de boulon (32) ;
les boulons passent à travers les seconds trous de boulon (56 ; 56a) et les premiers trous de boulon (32) ; et
le premier dispositif d'arrêt (108 ; 108a) et le carter (2) sont attachés conjointement par les boulons.

3. Dispositif de pivotement (110 ; 110a) selon la revendication 1 ou 2, dans lequel
la pluralité de rainures (36) est alignée à intervalles réguliers le long de l'arc circulaire présentant le centre coaxial à l'axe (102) de l'élément de rotation (4).

4. Dispositif de pivotement (110 ; 110a) selon l'une quelconque des revendications 1 à 3, dans lequel
la pluralité de rainures (36) est formée sur une surface circonférentielle (2a) du carter (2).

5. Dispositif de pivotement (110) selon l'une quelconque des revendications 1 à 4, dans lequel
le dispositif d'arrêt (108) s'étend vers l'extérieur du carter (2) le long d'une direction radiale de l'élément de rotation (4).

6. Dispositif de pivotement (110a) selon l'une quelconque des revendications 1 à 4, dans lequel
le dispositif d'arrêt (108a) s'étend vers l'extérieur du carter (2) le long de la direction axiale de l'élément de rotation (4).

7. Dispositif de pivotement (110a) selon la revendication 6, dans lequel
la pluralité de rainures (36) est formée sur une surface circonférentielle (2a) du carter (2) ; et
la taille du dispositif de pivotement (110a) suivant une direction radiale est égale à la taille du carter (2) suivant ladite direction radiale.

8. Dispositif de pivotement (110 ; 110a) selon l'une quelconque des revendications 1 à 7, dans lequel
le dispositif de pivotement (110 ; 110a) est un entraînement par engrenages de type à engrenages tournant de manière excentrique.

9. Robot à plusieurs articulations (100) comprenant le dispositif de pivotement (110 ; 110a) selon l'une quelconque des revendications 1 à 8, dans lequel
le dispositif de pivotement (110 ; 110a) commande une articulation qui est disposée le plus près d'un côté de base ;
l'élément de rotation (4) est agencé sur une base ; et
le carter (2) tourne par rapport à la base.
